# DEMANDE DE BREVET EUROPEEN

(11) **EP 3 910 572 A1**
(43) Date de publication de la demande: **17.11.2021**
(21) Numéro de dépôt: 21173825.7
(22) Date de dépôt: 14.05.2021
(51) Int. Cl.: G06Q 10/06

(54) **INFRASTRUCTURE DE SUPERVISION D'UN RÉSEAU DE TRANSPORT MULTIMODAL**

(30) Priorité: 15.05.2020 FR 2004816
(71) Demandeur: ALSTOM Transport Technologies, 93400 Saint-Ouen (FR); Institut de Recherche Technologique Systemx, 91120 Palaiseau (FR)
(72) Inventeur: BAUGUION, Pierre-Olivier, 75014 PARIS (FR); KADDAH, Rim, 75013 PARIS (FR); MARQUES, Nelson, 91400 ORSAY (FR)
(74) Mandataire: Lavoix

(57) **Abrégé**

L'invention concerne une infrastructure et un procédé de supervision d'un réseau de transport multimodal. Le procédé comprend :
-l'obtention (40) de données de trafic en temps réel incluant des requêtes de transport multimodal, et la génération (42) de requêtes de service monomodal à partir d'au moins une requête de transport multimodal,
-le calcul (44₁-44ᵢ), par au moins un système d'exploitation de réseau monomodal, d'au moins une table d'exploitation du réseau monomodal destinée à répondre à une requête de transport monomodal, chaque table d'exploitation étant définie en fonction de contraintes d'exploitation dudit réseau monomodal et comportant au moins un itinéraire comportant une suite de points d'arrêt à desservir et au moins une table horaire de desserte associée,
-le calcul (48), par le système de supervision central, à partir tables d'exploitation reçues des réseaux monomodaux, de synchronisations entre différentes tables d'exploitation pour respecter des contraintes d'interconnexions prédéfinies, et
-le calcul et la transmission d'au moins une consigne de modification de règle d'exploitation à au moins un réseau monomodal pour mettre en œuvre (50₁-50ᵢ) une table d'exploitation respectant lesdites synchronisations.

## Description

La présente invention concerne une infrastructure et un procédé de supervision d'un réseau de transport multimodal, le réseau multimodal regroupant une pluralité de réseaux monomodaux, chaque réseau monomodal étant équipé d'un système d'exploitation individuel adapté à commander une pluralité de véhicules de transport de passagers.

L'invention se situe dans le domaine des réseaux de transport de passagers.

De manière connue, dans les agglomérations urbaines, différents services de transport sont proposés aux passagers : services de train, services de métro, services de tramway, services de bus, services de transport à la demande etc.

Ces services sont gérés indépendamment les uns des autres le plus souvent par différents exploitants.

Dans le présent document, un réseau monomodal est un réseau sur lequel circulent des véhicules relevant d'un seul mode de transport : par exemple le métro, le bus, le tram, le train. L'exploitant d'un réseau monomodal assure le service sur ce réseau monomodal sur la base d'un plan de transport, c'est-à-dire d'un plan de desserte de stations, associé à une table horaire ou à une fréquence de passage. Un exploitant gère souvent un ensemble de réseaux monomodaux pour lesquels il n'y a pas de synchronisation effective entre eux.

De manière générale, un réseau monomodal se caractérise par l'existence d'un système d'exploitation centralisé permettant une gestion du trafic sur le réseau monomodal correspondant. Un système d'exploitation utilise des tables horaires pour commander le mouvement de chaque véhicule circulant sur le réseau monomodal.

Un réseau monomodal peut comporter une ou plusieurs lignes de circulation, chaque ligne étant définie par un ensemble de stations ou points d'arrêt, et un sens de circulation entre des stations de bout de ligne. Une table horaire définit les heures de départ de chaque station d'une ligne, les temps de parcours normaux entre deux stations de la ligne, les temps d'arrêt normaux en station, etc. Une table horaire est mise à jour dynamiquement au cours du déplacement du véhicule correspondant avec des informations d'exploitation, telles que par exemple l'intervalle avec le véhicule précédent le véhicule considéré, le temps nécessaire au transfert des passagers lors d'un arrêt en station, etc.

Un réseau de transport multimodal est, par définition, un réseau qui regroupe différents réseaux monomodaux et qui permet à un passager de se rendre d'une station de départ à une station d'arrivée en utilisant un ou plusieurs services de transport en commun.

Cependant, dans un tel réseau multimodal, il est difficile pour un passager de minimiser son temps de trajet entre une station de départ et une station d'arrivée de façon effective, notamment lorsque ce trajet comporte une correspondance entre deux services, c'est-à-dire une station permettant à un passager de descendre d'un premier véhicule desservant une première ligne d'un premier réseau monomodal pour monter dans un second véhicule desservant une seconde ligne d'un second réseau monomodal.

Le passager peut par exemple chercher à planifier son trajet en interrogeant une base de données mémorisant les horaires théoriques des différents services. Cependant les services étant gérés de manière indépendante, les horaires théoriques ne sont pas corrélés et peuvent conduire à une durée d'attente prolongée dans la station de correspondance. De plus, en cas de retard de véhicules, les horaires théoriques ne sont pas respectés. Alors même qu'il a optimisé son trajet, le passager est contraint à un trajet dont la durée est rallongée. La qualité de service perçue par le passager n'est donc pas optimale.

De plus, des incidents techniques ou d'une autre nature peuvent survenir, ce qui risque de provoquer un dysfonctionnement sur un ou plusieurs des réseaux monomodaux, qui a des répercussions sur le fonctionnement du réseau de transport multimodal.

Par exemple, un blocage du trafic des trains sur un réseau ferroviaire monomodal (e.g. une ligne de métro) risque de produire un dysfonctionnement qui se répercute à d'autres réseaux monomodaux, et se manifeste par des encombrements imprévus, un flux de passagers particulièrement important sur une autre ligne de métro ou sur des lignes de bus à proximité, comportant des interconnexions avec la ligne affectée. De manière analogue, un blocage d'une ou plusieurs routes risque de perturber le trafic d'un réseau monomodal de bus de manière difficile à contrôler.

Pour ces cas de figure, il est utile d'être en capacité d'intervenir rapidement, quasiment en temps réel, pour améliorer la qualité de service pour les passagers.

Pour ce faire, il y a un besoin pour une supervision de l'exploitation au niveau du réseau de transport multimodal.

L'invention a donc pour but de répondre à ce besoin, en proposant notamment une infrastructure de supervision d'un réseau de transport multimodal.

A cet effet, l'invention propose une infrastructure de supervision d'un réseau de transport multimodal, le réseau multimodal regroupant une pluralité de réseaux monomodaux, chaque réseau monomodal étant équipé d'un système d'exploitation individuel adapté à commander une pluralité de véhicules de transport. L'infrastructure comporte un système de supervision central, adapté à communiquer avec chaque système d'exploitation individuel de réseau monomodal, le système de supervision central étant adapté pour obtenir des données de trafic en temps réel incluant des requêtes de transport multimodal, et pour générer des requêtes de transport monomodal à partir d'au moins une requête de transport multimodal.

Chaque système d'exploitation individuel de réseau monomodal est configuré pour calculer des tables d'exploitation du réseau monomodal destinées à répondre à une requête de transport monomodal, chaque table d'exploitation étant définie en fonction de contraintes d'exploitation dudit réseau monomodal et comportant au moins un itinéraire comportant une suite de points d'arrêt à desservir et au moins une table horaire de desserte associée.

Le système de supervision central comportant au moins un processeur configuré pour :
- calculer, à partir de tables d'exploitation reçues des réseaux monomodaux, des synchronisations entre différentes tables d'exploitation pour respecter des contraintes d'interconnexions prédéfinies, et
- calculer et transmettre au moins une consigne de modification de règles d'exploitation à au moins un réseau monomodal pour mettre en œuvre une table d'exploitation respectant lesdites synchronisations.

Avantageusement, l'infrastructure de supervision d'un réseau de transport multimodal proposée comporte un système de supervision central, qui communique avec les systèmes d'exploitation individuels des réseaux monomodaux et qui est configuré pour calculer une consigne de modification de règles d'exploitation à mettre en œuvre par des réseaux de transport monomodaux, en fonction des contraintes d'exploitation de chaque réseau monomodal.

L'infrastructure de supervision d'un réseau de transport multimodal selon l'invention peut présenter une ou plusieurs des caractéristiques ci-dessous, prises indépendamment ou dans toutes leurs combinaisons techniquement acceptables.
- un module de mémorisation de contraintes de synchronisation, s'appliquant au niveau d'interconnexions entre réseaux monomodaux,
- un module de mémorisation de contraintes de flux, mises à jour en temps réel, permettant de calculer un temps de correspondance entre deux réseaux monomodaux dans une station d'interconnexion en fonction d'un flux de passagers.

La base de données comporte en outre un module de mémorisation d'itinéraires multimodaux, calculés dynamiquement par le système de supervision central en fonction des tables d'exploitation reçues des réseaux monomodaux, et des contraintes de synchronisation et des contraintes de flux mémorisées.

Selon un autre aspect, l'invention propose un procédé de supervision d'un réseau de transport multimodal, le réseau multimodal regroupant une pluralité de réseaux monomodaux, chaque réseau monomodal étant équipé d'un système d'exploitation individuel adapté à commander une pluralité de véhicules de transport, mis en œuvre dans une infrastructure de supervision d'un réseau de transport telle que décrite ci-dessus. Le procédé comporte :
- a) l'obtention, par le système de supervision central, de données de trafic en temps réel incluant des requêtes de transport multimodal, et la génération de requêtes de service monomodal à partir d'au moins une requête de transport multimodal,
- b) le calcul, par au moins un système d'exploitation de réseau monomodal, d'au moins une table d'exploitation du réseau monomodal destinée à répondre à une requête de transport monomodal, chaque table d'exploitation étant définie en fonction de contraintes d'exploitation dudit réseau monomodal et comportant au moins un itinéraire comportant une suite de points d'arrêt à desservir et au moins une table horaire de desserte associée,
- c) le calcul, par le système de supervision central, à partir tables d'exploitation reçues des réseaux monomodaux, de synchronisations entre différentes tables d'exploitation pour respecter des contraintes d'interconnexions prédéfinies, et
- d) le calcul et la transmission d'au moins une consigne de modification de règle d'exploitation à au moins un réseau monomodal pour mettre en œuvre une table d'exploitation respectant lesdites synchronisations.

Les avantages de ce procédé de supervision d'un réseau de transport multimodal sont analogues à ceux de l'infrastructure de supervision d'un réseau de transport multimodal.

Le procédé de supervision d'un réseau de transport multimodal selon l'invention peut présenter une ou plusieurs des caractéristiques ci-dessous, prises indépendamment ou dans toutes leurs combinaisons techniquement acceptables.

Le procédé comporte une évaluation de chaque table d'exploitation d'un système d'exploitation monomodal calculée selon un critère de pertinence, et en cas de pertinence non confirmée, une modification de la table d'exploitation par le système d'exploitation de réseau monomodal correspondant.

L'évaluation comporte une simulation de comportement de passagers suite à une mise en place de ladite table d'exploitation du réseau monomodal, et une évaluation d'un nombre de requêtes de transport multimodal satisfaites.

Le procédé comporte une itération des étapes a) à d) du procédé jusqu'à la validation d'une condition d'arrêt.

Chaque itinéraire comporte un trajet logique désigne une suite de points d'arrêt, selon un sens de parcours emprunté par un véhicule du réseau de transport monomodal et un trajet physique définissant des voies à emprunter par un véhicule du réseau de transport monomodal, et la consigne de modification de règle d'exploitation comporte au moins un changement d'itinéraire pour un réseau monomodal.

La consigne de modification de règle d'exploitation comporte, pour au moins un réseau monomodal, au moins un changement de table horaire de desserte dudit réseau monomodal et/ou au moins une modification de temps d'attente d'au moins un véhicule de transport dans une station dudit réseau monomodal.

Le calcul d'une consigne de modification de règle d'exploitation met en œuvre un calcul d'impact de ladite consigne de modification sur l'ensemble des réseaux monomodaux formant le réseau de transport multimodal, la consigne de modification étant déterminée en fonction de marges de modification qui sont définies par les contraintes opérationnelles d'exploitation de chaque réseau monomodal.

Le calcul d'une consigne de modification de règle d'exploitation met en œuvre des contraintes de flux de passagers mises à jour en temps réel.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 illustre schématiquement une infrastructure de supervision d'un réseau de transport multimodal selon un mode de réalisation de l'invention;
[Fig 2] la figure 2 est un synoptique des principales étapes d'un procédé de supervision d'un réseau de transport multimodal selon un mode de réalisation de l'invention.

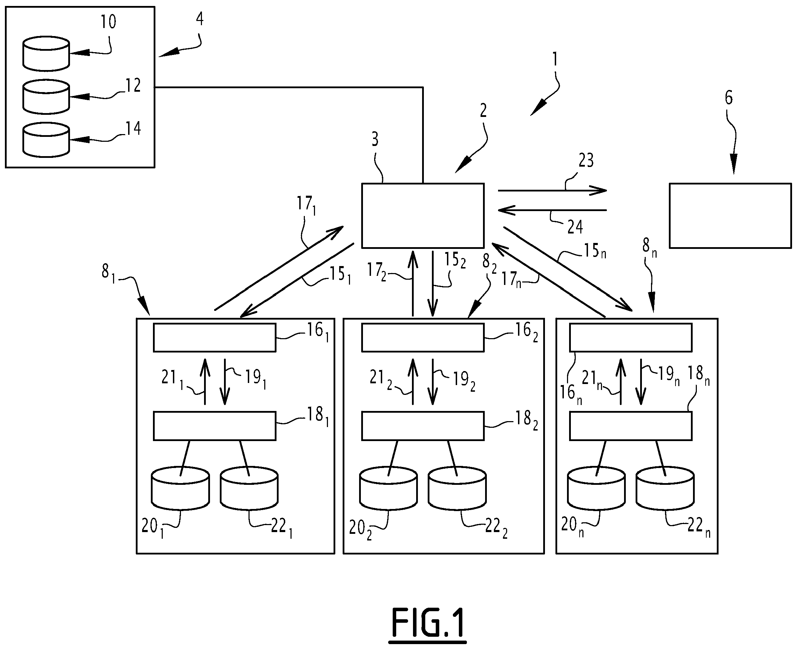

La figure 1 illustre schématiquement une infrastructure 1 de supervision d'un réseau de transport multimodal selon un mode de réalisation de l'invention.

Le réseau de transport multimodal regroupe une pluralité de réseaux monomodaux, chaque réseau monomodal comportant une ou plusieurs lignes sur lesquelles circulent des véhicules de transport de même type.

Dans la suite il est considéré que chaque réseau monomodal est constitué d'une ligne de transport.

Les véhicules de transport sont par exemple des types suivants : des métros, des bus, des trams, des trains. Néanmoins, il est à noter que l'application de l'invention ne se limite pas aux réseaux de transport terrestre, et s'étend par exemple au transport fluvial et/ou aérien.

Chaque ligne est définie par un plan de transport comportant une suite de points d'arrêt possibles, également appelés stations, entre deux points d'arrêt extrêmes appelés terminus de ligne. Deux sens de parcours opposés sont envisagés sur une même ligne de transport. En général le plan de transport comporte également un trajet permettant de desservir les stations de la ligne, appelé itinéraire associé à la ligne.

Pour les réseaux de transport monomodal de type ferroviaire (train, tram ou métro), les itinéraires possibles sont contraints par les rails de circulation et les possibilités d'interconnexion entre rails.

Pour les réseaux de transport monomodal de bus ou autres véhicules adaptés à rouler sur des routes, les itinéraires possibles sont définis par le réseau routier.

Ainsi, chaque réseau monomodal a des contraintes d'exploitation associées, par exemple le nombre de véhicules disponibles, les itinéraires possibles.

De manière générale, il existe des stations de correspondance, communes à au moins deux réseaux monomodaux, ou ayant une proximité géographique, permettant aux passagers d'effectuer un transfert d'une ligne à une autre.

Chaque réseau monomodal est équipé d'un système d'exploitation classique permettant une exploitation dynamique des véhicules en circulation, adapté à déterminer et à mettre en œuvre dynamiquement un service de transport qui est un ensemble constitué d'une table horaire associée à des points d'arrêts et une solution de transport (e.g des véhicules en circulation, ayant des caractéristiques de charge maximale, de vitesse etc).

Par exemple, les systèmes d'exploitation ATS pour « Automatic Train Supervision » sont connus pour les réseaux monomodaux ferroviaires (métro ou tram), et les systèmes d'exploitation SAE (« Système d'Aide à l'Exploitation ») pour les réseaux de type bus.

L'infrastructure 1 comprend un système de supervision central 2, comprenant un serveur 3 adapté à effectuer des calculs, comprenant notamment un processeur de calcul. Le système de supervision central 2 comprend ou est adapté à accéder, en écriture et en lecture, à une base de données 4.

Le système de supervision central 2 est adapté à communiquer, par une liaison de communication bidirectionnelle, avec un système 6 de collecte et de traitement qui collecte et traite des informations relatives au flux de passagers du réseau de transport.

De plus, le système de supervision central 2 est adapté à communiquer, via des liaisons de communication bidirectionnelles, avec chaque système d'exploitation individuel 8₁, 8₂, ..., 8ₙ de réseau monomodal faisant partie du réseau de transport multimodal.

Chaque système d'exploitation est opéré par plusieurs modules mis en œuvre par des systèmes informatiques interconnectés, par exemple des serveurs informatiques comportant des processeurs de calcul et des interfaces de communication adaptées à communiquer avec le système de supervision central 2.

Chaque système d'exploitation 8₁, 8₂,... ,8ₙ comprend un module de calcul 16₁, 16₂, ... 16ₙ adapté à calculer des règles d'exploitation du réseau, en fonction de demandes de services de transport à satisfaire, et en fonction de contraintes opérationnelles d'exploitation.

Les contraintes opérationnelles d'exploitation comprennent par exemple un temps minimal d'arrêt à quai à respecter, un temps de mise en place d'un nouveau véhicule (e.g. un bus), un temps entre rames successives à respecter pour un métro.

Elles sont par exemple mémorisées dans une mémoire 20₁, 20₂, ..., 20ₙ, à laquelle accède un module 18₁, 18₂,..,18ₙ de supervision du réseau monomodal, adapté à effectuer un calcul dynamique de l'état courant de la ligne du réseau monomodal correspondant.

Chaque module 18₁, 18₂,..,18ₙ de supervision du réseau monomodal est également adapté à accéder à une mémoire 22₁, 22₂,...,22ₙ, mémorisant des règles d'exploitation, par exemple itinéraires applicables aux véhicules du réseau monomodal.

Un itinéraire est défini par un trajet logique désignant une suite de stations à desservir, selon un sens de parcours emprunté par un véhicule du réseau monomodal. Pour un réseau monomodal de véhicules adaptés à rouler sur des voies distinctes, en plus du trajet logique des stations ou points d'arrêt à desservir, un itinéraire comporte également une définition de trajet physique définissant des voies à emprunter.

Pour un même réseau monomodal, plusieurs itinéraires sont mémorisés, par exemple un ou plusieurs itinéraires desservant un ensemble de stations formant la ligne du réseau monomodal ; un ou plusieurs itinéraires desservant des sous-ensembles de l'ensemble des stations.

Ces itinéraires sont associés à des tables horaires, formant des règles d'exploitation du réseau monomodal concerné.

Selon des consignes de modification reçues du système de supervision central 2, des modifications d'itinéraires et/ou tables d'horaires et/ou de véhicules mis en service sont mémorisées et effectuées.

Les modifications d'itinéraires peuvent porter sur des modifications du trajet logique ou du trajet physique d'un itinéraire, dans la mesure de marges de modification qui sont définies par les contraintes opérationnelles d'exploitation du réseau monomodal.

Par exemple, les contraintes opérationnelles d'exploitation définissent un premier groupe de stations parmi l'ensemble de stations qui sont toujours desservies, et un deuxième groupe de stations parmi l'ensemble de stations qui sont desservies de manière optionnelle.

Par exemple, pour un réseau monomodal de bus, les contraintes opérationnelles d'exploitation peuvent définir une distance maximale à parcourir entre deux stations, ce qui limite les trajets physiques qui sont sélectionnables pour relier les deux stations.

Les marges de modification comprennent par exemple la fréquence, la régularité et les temps moyens d'arrêt. Les marges de modification peuvent également intégrer un objectif d'optimisation lié à la consommation énergétique par exemple.

Pour chaque réseau monomodal, le module de calcul 16ᵢ met en œuvre une supervision de l'exploitation de la ligne, en fonction de la flotte de véhicules disponibles, de l'état de l'infrastructure routière ou ferroviaire, selon le type de réseau monomodal, et plus généralement en fonction de données d'exploitation obtenues en temps réel par le module de supervision 18ᵢ, de contraintes opérationnelles d'exploitation et de règles d'exploitation mémorisées.

Le système de supervision central 2 communique avec chaque système d'exploitation de réseau monomodal 8ᵢ par des requêtes 15ᵢ et reçoit de chaque système d'exploitation 8ᵢ des réponses 17ᵢ.

En particulier, le module de calcul 16ᵢ en coopération avec le module de supervision 18ᵢ détermine, suite à une requête 15ᵢ comportant une requête de service monomodal à satisfaire, une ou plusieurs offre(s) de service de transport 17ᵢ, avec modification des règles d'exploitation du réseau monomodal correspondant.

Ces modifications des règles d'exploitation entraînent une modification dynamique d'une table d'exploitation du réseau monomodal, définissant l'offre de service de transport du réseau monomodal, par exemple l'augmentation de la capacité de transport de passagers par augmentation de la fréquence de desserte d'une ou plusieurs stations, par la mise en service de véhicules de capacité augmentée ou par la mise en fonctionnement d'un nombre plus important de véhicules, ou bien au contraire, une diminution de la fréquence de desserte, la diminution du nombre de véhicules mis en fonctionnement, ou un ralentissement de la vitesse de déplacement des véhicules pour éviter un encombrement en station, ou un blocage à des points d'intersection de réseaux monomodaux.

La table d'exploitation du réseau monomodal modifiée 17ᵢ est transmise au système de supervision central 2 qui supervise et coordonne tous les réseaux de transport monomodaux formant le réseau de transport multimodal.

Le système de supervision central 2 met à jour les synchronisations des modes de transports impactés par la modification du service.

Le système de supervision central 2 accède à la base de données 4 dans laquelle sont mémorisées des modifications dynamiques des tables d'exploitation d'offres de transport multimodales, calculées par le serveur 3 du système de supervision central 2.

La base de données 4 comporte plusieurs sous-modules de mémorisation de données, ces données comportant des contraintes d'exploitation du réseau multimodal :
- un module 10 de mémorisation de contraintes de synchronisation, s'appliquant au niveau d'interconnexions entre réseaux monomodaux, comportant par exemple une contrainte de durée maximale de connexion entre des réseaux monomodaux du réseau multimodal, permettant d'assurer une qualité de service aux passagers du réseau multimodal ;
- un module 12 de mémorisation de contraintes de flux, mises à jour en temps réel, permettant de calculer le temps de correspondance entre deux réseaux monomodaux dans une station d'interconnexion en fonction du flux de passagers observé. En effet, lorsqu'un passager doit se déplacer entre un point d'arrêt desservi par un premier réseau monomodal et un deuxième point d'arrêt desservi par un deuxième réseau monomodal, le temps de correspondance, calculé par exemple sur une base de vitesse moyenne de déplacement, varie en fonction de la densité de flux de passagers ;
- un module 14 de mémorisation d'itinéraires multimodaux, calculés dynamiquement par le système de supervision central en fonction des tables d'exploitation (offres de service de transport) reçues de réseau monomodal, et des contraintes de synchronisation et de flux mémorisées.

Le serveur 3 est également connecté par une liaison de communication bidirectionnelle 23, 24 à un système 6 de collecte et de traitement d'informations relatives au flux de passagers, en particulier la charge (nombre de personnes à transporter), les temps moyens de déplacement entre stations d'interconnexion entre réseaux monomodaux.

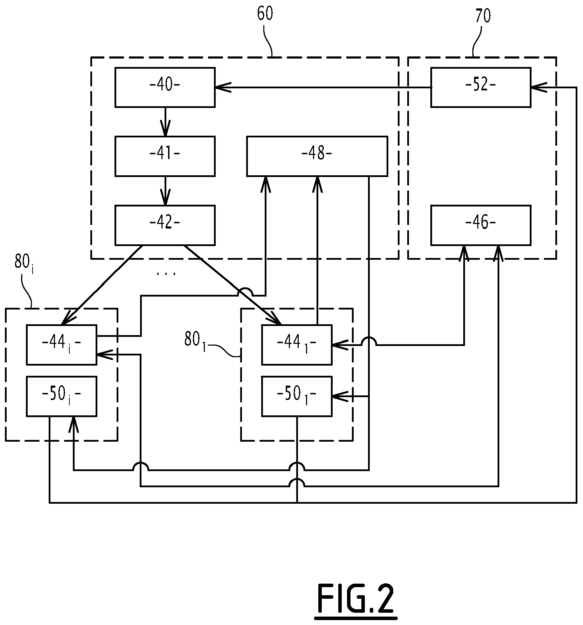

La figure 2 est un synoptique des principales étapes d'un procédé de supervision de réseau de transport multimodal mis en œuvre par l'ensemble du système composé du serveur 3 du système de supervision central 2, des systèmes d'exploitation 8ᵢ et du système 6, en collaboration avec la base de données 4.

Ainsi, un sous-ensemble d'étapes 60 est mis en œuvre par le système de supervision central 2, un sous-ensemble d'étapes 70 est mis en œuvre par le système 6 qui traite des informations relatives aux flux de passagers, et des sous-ensembles d'étapes 80₁ à 80ᵢ sont mis en œuvre par les systèmes d'exploitation 8₁ à 8ᵢ.

Plusieurs modes de fonctionnement sont envisagés.

Dans un premier mode de fonctionnement de trafic nominal, le procédé de supervision mis en œuvre par le système de supervision central coordonne les réseaux monomodaux selon des profils de fonctionnement prédéterminés, par exemple des profils favorisant la minimisation du temps de correspondance des passagers, ou des profils favorisant la minimisation de consommation d'énergie de l'ensemble du réseau de transport.

Dans un deuxième mode de fonctionnement de trafic perturbé, suite à un incident constaté en temps réel (e.g. panne ou incident technique affectant un ou plusieurs réseaux monomodaux, blocage d'une partie des voies de circulation pour un ou plusieurs des réseaux, demande importante de passagers en cas d'événement exceptionnel). Dans ce mode de fonctionnement de trafic perturbé, les données de trafic, obtenues et analysées en temps réel, permettent de détecter et de caractériser la perturbation.

Dans le deuxième mode de fonctionnement, le système de supervision central coordonne en continu, suite à l'analyse du trafic en temps réel, des consignes de modification de règles d'exploitation pour un ou plusieurs réseaux monomodaux, en fonction de marges de modification qui sont définies par les contraintes opérationnelles d'exploitation de chaque réseau monomodal.

En d'autres termes, le système de supervision central détermine des offres de service multimodales dites élastiques, c'est-à-dire dans des marges de modification prédéfinies par rapport à des contraintes à respecter.

Par exemple, pour le cas d'un réseau monomodal de bus, la desserte de certaines stations est assurée, mais le trajet physique entre les stations varie dans des marges prédéfinies.

Le procédé réalise le calcul d'une consigne de modification de règle d'exploitation, et met en oeuvre un calcul d'impact de ladite consigne de modification sur l'ensemble des réseaux monomodaux formant le réseau de transport multimodal, la consigne de modification étant déterminée en fonction de marges de modification qui sont définies par les contraintes opérationnelles d'exploitation de chaque réseau monomodal.

Le procédé met en œuvre plusieurs étapes de programmation qui sont décrites ci-après.

Lors d'une étape 40, le système de supervision central 2 reçoit des informations de trafic en temps réel et reçoit des requêtes de transport multimodales, appelées par la suite « demandes OD » (pour Origine Destination) à satisfaire, ces requêtes concernant des déplacements multimodaux des passagers.

Dans un mode de réalisation, les demandes OD comportent également un horaire associé à chaque station de départ (station « origine ») et un nombre de passagers associé.

Le procédé met en œuvre, dans le système de supervision central, un processus de priorisation des demandes ODs (Origine Destination) 41 basé sur l'état du réseau multimodal et la demande prévue sur les différentes lignes monomodales afin de mieux répondre aux demandes surtout sur les branches du réseau où beaucoup de demandes concurrentes sont prévues. Ainsi, l'ordre de priorité choisi est par exemple un ordre qualitatif, les demandes ODs les plus prioritaires permettant d'augmenter le plus la qualité de service de transport multimodal.

Lors de la priorisation 41, les demandes ODs sont ordonnées selon l'ordre de priorité choisi.

Le procédé effectue une programmation dynamique 42 de calcul utilisant des arbres de décision construits à partir des tables d'exploitation de chaque réseau monomodal. Au vu de la complexité d'un réseau de transport multimodal, une partie des branches des arbres de décision sont élaguées pour réaliser un calcul en temps contraint. Les arbres de décision retenus comportent des offres multimodales composées de trajets et horaires de desserte possibles, dans les marges de modifications prédéfinies. Ce procédé de programmation dynamique 42 permet de diviser les requêtes de transport multimodal, appelées requêtes ou demandes multimodales ci-après, en une série de requêtes de service monomodal, qui sont transmises aux systèmes d'exploitation 8₁ à 8ᵢ des réseaux monomodaux concernés.

Bien entendu le nombre de réseaux monomodaux concernés varie au cas par cas. Pour simplifier l'explication, seulement les étapes mises en œuvre par des systèmes d'exploitation 8₁ et 8ᵢ ont été explicitement représentées.

Chaque système d'exploitation 8₁, 8ᵢ concerné met en œuvre lors d'une étape 44₁, 44ᵢ, un procédé de décision basé sur la programmation dynamique, pour trouver les consignes de modification nécessaires pour satisfaire les requêtes de service monomodal reçues. Ces consignes de modification permettent de générer des tables d'exploitation de transport monomodal (ou offres monomodales).

La décision produite prend en compte les contraintes opérationnelles d'interconnexion qui sont appliquées aux demandes (trajets et horaires) retenues à l'étape 42, pour déterminer les offres qui respectent des contraintes d'interconnexion prédéfinies, par exemple un temps d'attente maximal dans une station d'interconnexion, ou la distance entre deux véhicules successifs sur une même ligne.

Ensuite, à l'étape 46, la table d'exploitation du réseau monomodal (offre monomodale) calculée par chaque système d'exploitation 8₁ à 8ᵢ, est transmise au système 6, qui en évalue la pertinence selon un critère de pertinence. Dans un mode de réalisation, un modèle de comportement des passagers est appliqué à l'offre pour connaitre les flux de passager et les déplacements engendrés par chaque offre monomodale.

Par exemple, l'étape 46 met en œuvre un modèle de comportement des passagers par une simulation multi-agent. Cette simulation permet d'évaluer le nombre de demandes multimodales (demandes OD) satisfaites si la nouvelle table d'exploitation est mise en œuvre.

La pertinence de l'offre est par exemple évaluée par un critère de pertinence qui est le nombre de demandes OD satisfaites, les demandes étant ordonnées selon l'ordre de priorité choisi, en comparaison de celui en utilisant la table d'exploitation (ou offre de service de transport) antérieure. Si le nombre de demandes OD prioritaires satisfaites est supérieur au nombre de demandes OD prioritaires satisfaites précédemment, la pertinence est confirmée.

Si la pertinence n'est pas confirmée pour une offre monomodale provenant d'un système d'exploitation 8ᵢ, l'étape 46 est suivie de l'étape 44ᵢ pour la mise en œuvre d'une modification de la table exploitation définissant l'offre monomodale.

Une fois la pertinence de l'offre monomodale confirmée par le système 6, chaque système d'exploitation 8₁ à 8ᵢ envoie la proposition de l'offre monomodale au système de supervision central, qui met en oeuvre une étape 48 de calcul de synchronisation et de validation du maintien de la synchronisation avec le(s) mode(s) de transport impacté(s) par ce changement d'offre afin de garantir un service de transport multimodal en appliquant les offres de transport monomodales.

Le calcul de synchronisation comporte, à partir des données de tables d'exploitation (itinéraires, points d'arrêt à desservir, horaires), le calcul d'interconnexions possibles entre véhicules de réseaux monomodaux, et la vérification des synchronisations temporelles et/ou spatiales et/ou en capacité de transport entre véhicules pour répondre à une requête multimodale de bout en bout.

Lors de l'étape 48, des synchronisations peuvent être recalculées et mémorisées.

L'étape 48 est mise en oeuvre après réception des offres monomodales de tous les réseaux monomodaux concernés.

Suite à l'étape 48, des consignes de modifications issues des règles d'exploitation pour un ou plusieurs des réseaux monomodaux sont transmises aux systèmes d'exploitation des réseaux monomodaux, qui mettent en oeuvre l'offre de transport monomodal lors des étapes 50₁ à 50ᵢ en fonction des consignes. Par exemple, des trains supplémentaires sont mis en service, ou des modifications d'itinéraire de bus sont effectuées.

Les étapes 50₁ à 50ᵢ sont suivies d'une évaluation 52, mise en oeuvre par le système 6, de l'impact de l'ensemble des tables d'exploitation définissant des offres de service de transport, permettant de mettre à jour l'état des requêtes multimodales (demandes OD) fournies en entrée de l'étape 40.

En cas de non possibilité de satisfaire une requête multimodale complète, le processus s'arrête en 48 et se poursuit à l'étape 42 pour d'autres requêtes multimodales.

Les étapes 40 à 52 sont itérées jusqu'à ce que qu'une condition d'arrêt soit satisfaite. La condition d'arrêt est par exemple un temps de calcul maximal, par exemple inférieur ou égal à 3 minutes, ce qui permet d'obtenir une visibilité sur l'évolution du réseau de transport multimodal à 2h. Ce processus de calcul itératif permet d'obtenir, dans le temps de calcul maximal, des tables d'exploitation permettant de satisfaire des requêtes multimodales mises à jour dynamiquement.

Ce processus de calcul entre les trois systèmes évoqués utilise des algorithmes de calcul glouton, permettant d'obtenir une solution en temps polynomial.

Les étapes du procédé mettent en œuvre un algorithme de supervision d'infrastructure de transport mettant en œuvre des modifications dynamiques de fonctionnement des réseaux monomodaux, en fonction de données de trafic analysées en temps réel.

Avantageusement, les calculs sont effectués en temps contraint, permettant ainsi une reconfiguration dynamique rapide d'un réseau de transport multimodal pour satisfaire les requêtes multimodales de transport de passagers.

Avantageusement, cela permet d'améliorer le transport de passagers en cas de survenue d'un incident.

Ces systèmes de supervision mettent en œuvre la modification dynamique des règles d'exploitation, en particulier : une modification des tables horaires et/ou de la fréquence des véhicules, une modification d'itinéraire (trajet logique et/ou trajet physique).

## Revendications

1. Infrastructure de supervision d'un réseau de transport multimodal, le réseau multimodal regroupant une pluralité de réseaux monomodaux, chaque réseau monomodal étant équipé d'un système d'exploitation individuel adapté à commander une pluralité de véhicules de transport, **caractérisée en ce qu'**elle comporte :
- un système de supervision central (2), adapté à communiquer avec chaque système d'exploitation (8₁,..., 8ᵢ) individuel de réseau monomodal,
le système de supervision central (2) étant adapté à obtenir des données de trafic en temps réel incluant des requêtes de transport multimodal, et à générer des requêtes de transport monomodal à partir d'au moins une requête de transport multimodal,
chaque système d'exploitation (8₁,..., 8ᵢ) individuel de réseau monomodal étant configuré pour calculer des tables d'exploitation du réseau monomodal destinées à répondre à une requête de transport monomodal, chaque table d'exploitation étant définie en fonction de contraintes d'exploitation dudit réseau monomodal et comportant au moins un itinéraire comportant une suite de points d'arrêt à desservir et au moins une table horaire de desserte associée,
le système de supervision central (2) comportant au moins un processeur configuré pour :
- calculer, à partir de tables d'exploitation reçues des réseaux monomodaux, des synchronisations entre différentes tables d'exploitation pour respecter des contraintes d'interconnexions prédéfinies, et
- calculer et transmettre au moins une consigne de modification de règles d'exploitation à au moins un réseau monomodal (8₁,.... 8ᵢ) pour mettre en oeuvre une table d'exploitation respectant lesdites synchronisations.

2. Infrastructure selon la revendication 1, comportant en outre un système (6) de collecte et de traitement d'informations relatives aux flux de passagers, adapté à communiquer avec le système de supervision central (2), ledit système (6) étant configuré pour évaluer chaque table d'exploitation d'un système d'exploitation monomodal (8₁,..., 8ᵢ) selon un critère de pertinence.

3. Infrastructure selon la revendication 2, dans laquelle le critère de pertinence est une augmentation d'un nombre de requêtes de transport multimodal satisfaites, ces requêtes étant ordonnées selon un ordre de priorité choisi.

4. Infrastructure selon la revendication 2 ou 3, comportant en outre une base de données (4), le système de supervision central (2) étant adapté pour accéder en écriture et en lecture à ladite base de données (4), la base de données (4) comportant :
- un module (10) de mémorisation de contraintes de synchronisation, s'appliquant au niveau d'interconnexions entre réseaux monomodaux,
- un module (12) de mémorisation de contraintes de flux, mises à jour en temps réel, permettant de calculer un temps de correspondance entre deux réseaux monomodaux dans une station d'interconnexion en fonction d'un flux de passagers.

5. Infrastructure selon la revendication 4, dans laquelle ladite base de données (4) comporte en outre un module (14) de mémorisation d'itinéraires multimodaux, calculés dynamiquement par le système de supervision central (2) en fonction des tables d'exploitation reçues des réseaux monomodaux, et des contraintes de synchronisation et des contraintes de flux mémorisées.

6. Procédé de supervision d'un réseau de transport multimodal, le réseau multimodal regroupant une pluralité de réseaux monomodaux, chaque réseau monomodal étant équipé d'un système d'exploitation individuel adapté à commander une pluralité de véhicules de transport, mis en œuvre dans une infrastructure de supervision d'un réseau de transport conforme aux revendications 1 à 5, comportant :
a) l'obtention (40), par le système de supervision central, de données de trafic en temps réel incluant des requêtes de transport multimodal, et la génération (42) de requêtes de service monomodal à partir d'au moins une requête de transport multimodal,
b) le calcul (44₁-44ᵢ), par au moins un système d'exploitation de réseau monomodal, d'au moins une table d'exploitation du réseau monomodal destinée à répondre à une requête de transport monomodal, chaque table d'exploitation étant définie en fonction de contraintes d'exploitation dudit réseau monomodal et comportant au moins un itinéraire comportant une suite de points d'arrêt à desservir et au moins une table horaire de desserte associée,
c) le calcul (48), par le système de supervision central, à partir tables d'exploitation reçues des réseaux monomodaux, de synchronisations entre différentes tables d'exploitation pour respecter des contraintes d'interconnexions prédéfinies, et
d) le calcul et la transmission d'au moins une consigne de modification de règle d'exploitation à au moins un réseau monomodal pour mettre en oeuvre (50₁-50ᵢ) une table d'exploitation respectant lesdites synchronisations.

7. Procédé selon la revendication 6, comportant une évaluation (46) de chaque table d'exploitation d'un système d'exploitation monomodal calculée selon un critère de pertinence, et en cas de pertinence non confirmée, une modification de la table d'exploitation par le système d'exploitation de réseau monomodal correspondant.

8. Procédé selon la revendication 7, dans lequel ladite évaluation (46) comporte une simulation de comportement de passagers suite à une mise en place de ladite table d'exploitation du réseau monomodal, et une évaluation d'un nombre de requêtes de transport multimodal satisfaites.

9. Procédé selon l'une des revendications 6 à 8, comportant une itération des étapes a) à d) du procédé jusqu'à la validation d'une condition d'arrêt.

10. Procédé selon l'une des revendications 6 à 9, dans lequel chaque itinéraire comporte un trajet logique désignant une suite de points d'arrêt, selon un sens de parcours emprunté par un véhicule du réseau de transport monomodal et un trajet physique définissant des voies à emprunter par un véhicule du réseau de transport monomodal, et ladite consigne de modification de règle d'exploitation comporte au moins un changement d'itinéraire pour un réseau monomodal.

11. Procédé selon l'une des revendications 6 à 10, dans lequel ladite consigne de modification de règle d'exploitation comporte, pour au moins un réseau monomodal, au moins un changement de table horaire de desserte dudit réseau monomodal et/ou au moins une modification de temps d'attente d'au moins un véhicule de transport dans une station dudit réseau monomodal.

12. Procédé selon l'une des revendications 6 à 11, dans lequel le calcul d'une consigne de modification de règle d'exploitation met en oeuvre un calcul d'impact (52) de ladite consigne de modification sur l'ensemble des réseaux monomodaux formant le réseau de transport multimodal, la consigne de modification étant déterminée en fonction de marges de modification qui sont définies par les contraintes opérationnelles d'exploitation de chaque réseau monomodal.

13. Procédé selon l'une des revendications 6 à 12, dans lequel le calcul (44₁-44ᵢ, 48) d'une consigne de modification de règle d'exploitation met en oeuvre des contraintes de flux de passagers mises à jour en temps réel.
